## Europäisches Patentamt
## European Patent Office
## Office européen des brevets

(19)

(11) Numéro de publication: **0 083 520**
**B1**

(12) **FASCICULE DE BREVET EUROPEEN**

(45) Date de publication du fascicule du brevet:
06.11.85

(51) Int. Cl.⁴: **H 04 Q 3/52**, G 02 F 1/29

(21) Numéro de dépôt: **82402237.0**

(22) Date de dépôt: **07.12.82**

(54) **Dispositif de commutation de faisceaux optiques, et central téléphonique comprenant un tel dispositif.**

(30) Priorité: **18.12.81 FR 8123729**

(43) Date de publication de la demande:
**13.07.83 Bulletin 83/28**

(45) Mention de la délivrance du brevet:
**06.11.85 Bulletin 85/45**

(84) Etats contractants désignés:
**DE GB NL SE**

(56) Documents cités:
**EP - A - 0 053 957**
**FR - A - 2 243 573**
**FR - A - 2 385 266**

**Applied Phys. Letters, vol. 29, no. 9, 1/11/76, J.P. Huignaroi, pages 591-593**
**Applied Optics, Vol. 21, no. 18, 15/9/82, Y.H. JA, p. 230-231**

(73) Titulaire: **THOMSON-CSF, 173, Boulevard Haussmann, F-75379 Paris Cedex 08 (FR)**

(72) Inventeur: **Huignard, Jean-Pierre, THOMSON-CSF SCPI 173 Bld. Haussmann, F-75379 Paris Cedex 08 (FR)**
Inventeur: **Le Du, Bertrand, THOMSON-CSF SCPI 173 Bld. Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

## Description

La présente invention se rapporte aux dispositifs de commutation électro-optiques qui permettent de relier des organes photoémetteurs d'entrée à des organes photorécepteurs de sortie par des liaisons optiques modifiables sous l'action de signaux de commande électriques extérieurs. L'application de ces dispositifs à la commutation téléphonique permet d'obtenir un central téléphonique dans laquel la mise en relation des lignes d'abonnés s'effectue sans contact électrique mobile. Le domaine considéré est donc celui des techniques de commutation spatiale de faisceaux issus par exemple, de fibres optiques monomodes ou multimodes.

Dans la demande de brevet européen publié sous le numéro 0 053 957 le 16.6.82, après la date de priorité de la présente demande, il est décrit un dispositif qui concerne les commutateurs permettant de relier par voie optique au moins l'un des circuits d'un ensemble de circuits d'entrée à au moins un circuit d'un ensemble de circuits de sortie. Il consiste à éclairer avec des faisceaux parallèles issus d'une matrice de circuits d'entrée un milieu photosensible. Les faisceaux se diffractant alors sur des strates inscrites dans le milieu pour aller atteindre l'un des circuits d'une matrice de circuits photorécepteurs. Les strates sont inscrites par interférences de deux faisceaux dont la longueur d'onde est différente de celles des faisceaux d'entrée; la longueur d'onde ces faisceaux d'entrée n'étant pas située dans le domaine de sensibilité spectrale du milieu photosensible. L'inscription des strates qui permettent d'assurer la commutation entre deux abonnés quelconques est réalisée à l'aide de deux faisceaux issus d'un laser. Le matériau photosensible utilisé étant épais, le changement de longueur d'onde entre l'inscription et la lecture oblige un positionnement des faisceaux d'enregistrement sous les incidences particulières. Ceci permet d'assurer, à la lecture, la déflexion du faisceau vers le circuit voulu de la matrice de sortie. Le dispositif assurant l'inscription du réseau de strates comporte un double système de déflexion XY dont la fonction est de choisir dans le plan de commutation un point quelconque et de positionner le faisceau avec l'incidence requise sur le cristal; ce faisceau pivotant ainsi autour d'un point sélectionné dans le plan du cristal.

L'inconvénient de ce dispositif réside dans la difficulté de réglage des angles d'incidence des faisceaux d'enregistrement dans le milieu photosensible.

Un document de l'art connu, à savoir la demande de brevet français FR-A-2 243 573 décrit un dispositif dans lequel un point objet de coordonnée (a, b) d'une matrice objet émet un faisceau de lumière divergent qui couvre toute une matrice d'enregistrement. Un faisceau de référence de lumière cohérente est également émis et couvre également toute cette matrice d'enregistrement. Dans ce document, le support d'enregistrement comporte un premier plan de barres-électrodes transparentes, une couche photo-conductrice, une couche d'un matériau dont les propriétés optiques varient en fonction du champ électrique appliqué et un deuxième plan de barres-électrodes transparentes croisées avec les premières, une tension électrique de sélection étant appliquée entre une barre du premier plan et une barre du deuxième plan. La sélection de l'hologramme à enregistrer (m, n) se fait uniquement par le choix des barres-électrodes auxquelles est appliquée la tension électrique nécessaire pendant la durée d'enregistrement. Après un temps de pose $\Delta t$, la tension électrique de commande est déconnectée, l'hologramme étant mémorisé. On a donc enregistré sur l'hologramme de coordonnées (m, n) le point objet de coordonnées (a, b). Ainsi, après enregistrement, l'ensemble de source R(m, n) liées biunivoquement aux points hologrammes B(m, n) sert de référence de restitution à l'hologramme B(m, n) et donne un point image correspondant au point (a, b) sur une matrice S(a,b) formée d'éléments réceptifs.

Ce dispositif présente plusieurs inconvénients et notamment après sélection d'un hologramme par son choix de barres électrodes la nécessité d'un temps de pose $\Delta t$.

Le dispositif selon l'invention est basé, sur la déflexion angulaire du faisceau par un réseau de strates photoinduit dans un milieu photosensible. Il apporte une simplification notable de la configuration optique pour l'inscription et la lecture des réseaux de strates de pas variable et diffractant les faisceaux dans les conditions de Bragg par rapport au dispositif de l'art connu.

En effet, pour pallier l'inconvénient du dispositif de l'art antérieur, dans le dispositif de l'invention le milieu photosensible est éclairée de façon uniforme, un modulateur spatial bidimensionnel permettant de sélectionner un des circuits photoémetteurs.

L'invention a pour objet un dispositif de commutation de faisceaux optiques destiné à relier par voie optique au moins l'un des circuits d'un ensemble de circuits photoémetteurs à au moins un circuit d'un ensemble de circuits photorécepteurs, comprenant des moyens de génération de deux faisceaux lumineux d'inscription, ces moyens de génération consistant en deux sources lumineuses et des moyens de déflexion du rayonnement émis par le circuit photoémetteur rendu préalablement parallèle par des moyens de collimation, ces moyens de déflexion permettant de diriger le rayonnement sur la partie active du circuit photorécepteur correspondant, ces moyens de déflexion consistant en un réseau de diffraction inscrit dans un milieu photosensible obtenu par l'interférence de ces deux faisceaux lumineux d'inscription, ces deux faisceaux lumineux d'inscription, créant le réseau de diffraction dans le milieu photosensible, ayant une longueur d'onde différente de celle des faisceaux issus des circuits photoémetteurs, et les deux faisceaux lumineux d'inscription étant des faisceaux d'onde plane éclairant, tous deux, uniformément le milieu photosensible, caractérisé en ce qu'il comprend un modulateur spatial bidimensionnel positionné sur le parcours de ces faisceaux d'inscription entre lesdites sources lumineuses et le milieu photosensible, ce modulateur permettant de sélectionner des zones limitées dans lesquelles des réseaux de diffraction sont inscrits, la sélection de ces zones s'effectuant par l'ouverture d'une fenêtre transparente devant les zones limitées dans lesquelles des réseaux de diffraction sont inscrits et par obturation des autres zones, la longueur d'onde du rayonnement émis par le circuit photoémetteur n'étant pas située dans le domaine de sensibilité spectrale du milieu photosensible, ce milieu photosensible, dans lequel le réseau de diffraction est un réseau tridimensionnel de strates, étant continûment recyclable.

L'invention a aussi pour objet un central téléphonique automatique utilisant un tel dispositif de commutation.

L'invention sera mieux comprise au moyen de la description qui suit et des figures annexées parmi lesquelles:

— les figures 1 et 2 illustrent un schéma partiel du dispositif suivant l'invention;

— les figures 3 et 4 sont des schémas explicatifs du fonctionnement du dispositif suivant l'invention;

— la figure 5 illustre un aspect particulier du dispositif selon l'invention;

— la figure 6 est un schéma explicatif du fonctionnement du dispositif suivant l'invention;

— les figures 7 et 8 illustrent deux aspects particuliers du dispositif selon l'invention;

— les figures 9 à 13 sont des figures explicatives du fonctionnement du dispositif de l'invention.

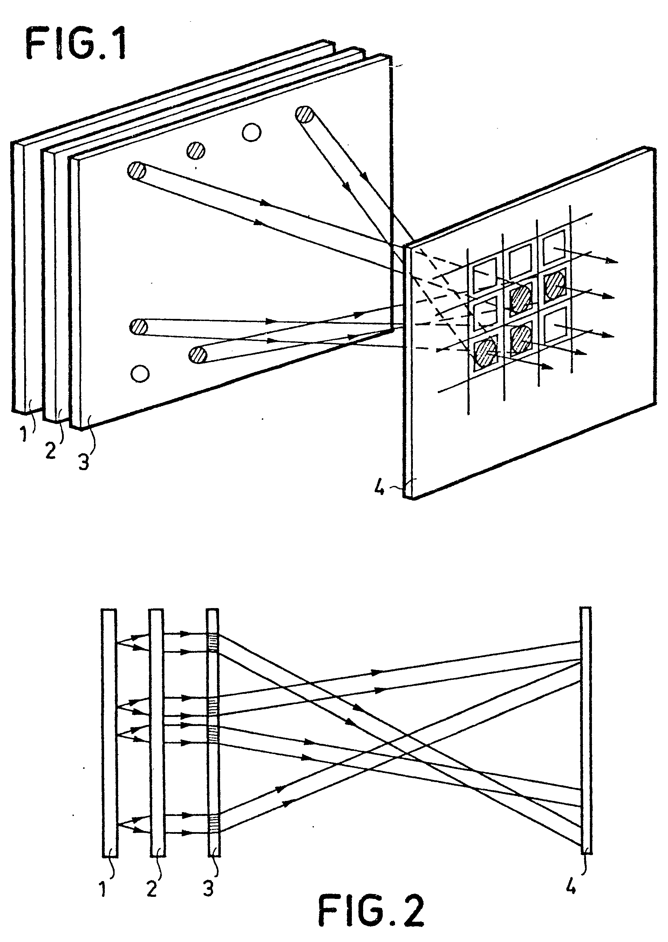

Les figures 1 et 2 illustrent différentes matrices de circuits. Les faisceaux lumineux issus de la matrice 1 des circuits photoémetteurs sont rendus parallèles par passage à travers une matrice de microlentilles 2. Ces faisceaux alors se diffractent sur des strates inscrites dans le milieu 3 pour atteindre différents circuits de la matrice 4 de circuits photorécepteurs. Ces strates, ayant été inscrites dans un milieu photosensible épais, sont donc des plans parallèles au plan bissecteur des surfaces d'ondes incidentes qui ont permis, par interférence, leur inscription dans ce milieu. Il y a aussi matérialisation d'une sortie de «store vénitien» fait de strates équidistantes. Dans notre cas, ce milieu est un milieu photosensible électrooptique. C'est un milieu continûment recyclable. Ce peut être par exemple un milieu à haut rendement de type oxyde de bismuth-silicium (BSO).

La longueur d'onde des faisceaux provenant des circuits photoémetteurs n'est pas située dans le domaine de sensibilité spectrale du milieu, elle est située par exemple dans le domaine infra-rouge. Ainsi la matrice d'émission 1 est constituée d'un réseau de m × n sources lumineuses modulables, collimatées à l'aide d'un réseau 2 de microlentilles ou de fibres focalisantes de type à gradient d'indice par exemple. Les faisceaux ainsi générés sont placés en regard d'une plaquette 3 de matériau BSO servant de support à l'enregistrement de réseaux de strates de pas et d'orientation convenables. Ces réseaux sont inscriptibles et effaçables. La lecture du réseau n'étant pas destructrice aux longueurs d'onde considérées, le faisceau incident est donc défléchi vers l'adresse désirée, et lu sur une matrice de photodétecteurs. On établit ainsi la liaison optique entre deux abonnés. L'intérêt essentiel du dispositif tient à la possibilité de «croiser» dans l'espace tous les faisceaux lumineux se propageant indépendamment entre tous les points des matrices d'entrée 1 et de sortie 4.

L'inscription des strates qui permettent d'assurer la commutation entre deux abonnées quelconques est réalisée à l'aide de deux faisceaux issus par exemple d'un laser Hélium-Cadmium (He-Cd).

A titre d'exemple non limitatif, on peut considérer que les circuits photoémetteurs et les circuits photorécepteurs sont réalisés par des extrémités de fibres optiques; les microlentilles de la matrice 2 étant réalisées, par exemple, par des lentilles à gradient d'indice.

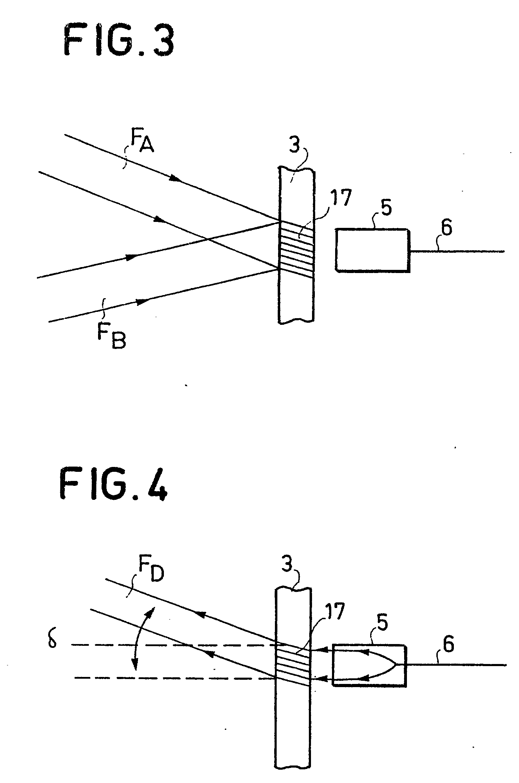

Le fonctionnement d'une cellule de commutation spatiale est illustré sur les figures 3 et 4; la figure 3 représentant l'inscription et la figure 4 la lecture des réseaux de commutation. La déflexion angulaire du faisceau issu de la fibre optique 6 est obtenue par un réseau de strates enregistré dans un matériau photosensible épais 3, inscriptible et effacable. Les réseaux inscrits avec des pas variables, assurent donc une déviation angulaire $\delta = \dfrac{\lambda l}{p}$; $\lambda l$ étant la longueur d'onde de lecture et p le pas du réseau photoinduit. Le réseau est enregistré et effacé avec une longueur d'onde correspondant au domaine de sensibilité spectrale du matériau utilisé; pour les cristaux BSO on a: $\lambda_i \simeq 450 - 550$ nm. Le faisceau de lecture, étant peu absorbé, n'affecte pas la modulation d'indice photoinduite; la lecture étant non destructive. Le pas et l'orientation des strates du réseau déterminent donc la direction du faisceau défléchi vers un abonné particulier. Le réseau étant enregistré dans un milieu photosensible épais, l'incidence des faisceaux d'inscription FA et FB doit être calculée pour que l'onde de lecture diffracte dans les conditions de Bragg en FD. L'une des difficultés importantes liée à l'utilisation d'une telle cellule de déflexion tient d'ailleurs à la précision angulaire d'adressage requise sur les faisceaux FA et FB servant à l'enregistrement. Une lentille à gradient d'indice est représentée en 5.

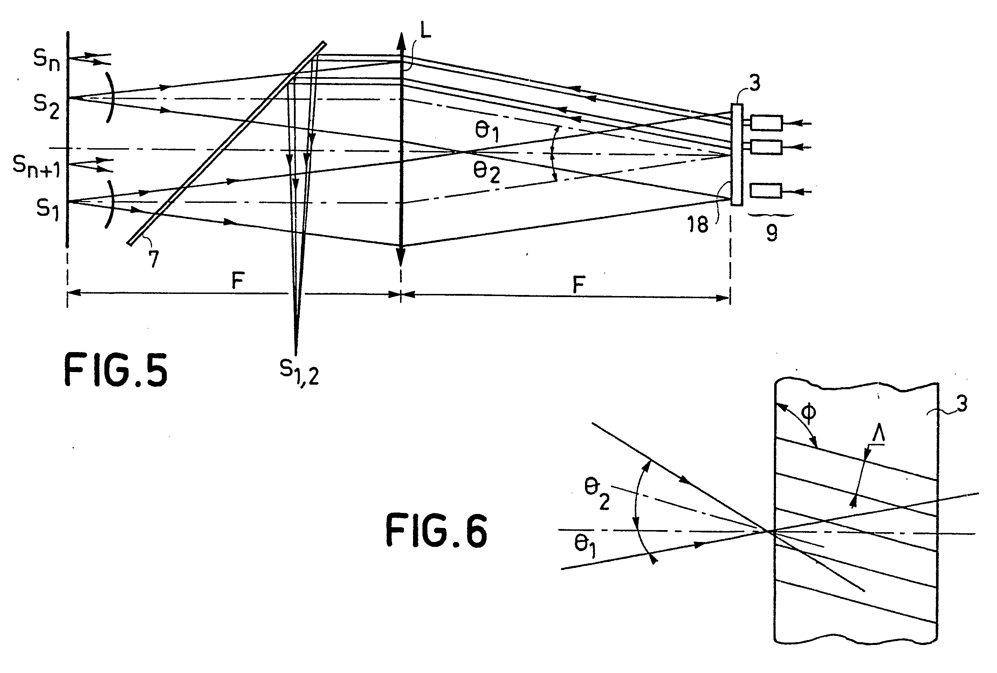

Le dispositif de commutation de faisceaux optiques selon l'invention, dont le fonctionnement général vient d'être exposé, est réalisé à l'aide d'une structure optique simple permettant la commutation spatiale à partir, par exemple, d'un réseau ordonné de fibres. Le matériau photosensible, support du réseau holographique, est, par exemple, un monocristal de BSO, qui est un matériau photoréfractif à variation d'indice photoinduite, fonctionnant dans la configuration électro-optique transverse. Selon le schéma de la figure 5 le plan de commutation 18 disposé dans le plan focal de la lentille est éclairé sur toute sa surface. A tout couple de sources d'enregistrement $S_1$ et $S_2$ à la longueur d'onde $\lambda = 514$ nm, ou $\lambda = 488$ nm par exemple, il correspond après traversée de la lentille L, deux ondes planes inclinées par rapport à l'axe suivant des angles $\theta_1$ et $\theta_2$. Ces deux ondes interfèrent et créent dans le volume du matériau photosensible un système de strates d'interférences dont le pas et l'orientation sont fixés par les valeurs des angles $\theta_1$ et $\theta_2$. Pour tout faisceau issu de l'un des émetteurs 9, la déflexion angulaire est la même, et après traversée de L, les différents faisceaux élémentaires convergent tous au même point, de coordonnées $S_{1,2}$. La déflexion en un autre point nécessite l'inscription d'un réseau de pas différent, la position des nouvelles sources d'enregistrement $S_2$ et $S_3$ est calculée pour que le réseau induit dans le cristal BSO diffracte également dans les conditions de Bragg pour cette nouvelle valeur du pas. Selon ce principe on peut donc diffracter sous incidence Bragg le faisceau issu des fibres optiques en prépositionnant des sources d'inscriptions $S_n$ - $S_{n+1}$. La position des sources $S_n$ et $S_{n+1}$ est déduite du calcul. Le pas du réseau est principalement fonction de la distance $S_n$ - $S_{n+1}$ et l'inclinaison des strates assurant la diffraction dans les conditions de Bragg est fournie par la valeur des angles d'inclinaisons $\theta_n$ - $\theta_{n+1}$. A titre d'exemple, la figure 6 illustre la position des strates d'interférence pour une position $S_1$ - $S_2$ des sources d'enregistrement. Le réseau de strates est décrit par les relations suivantes:

— l'angle $\phi$ d'inclinaison des strates par rapport à la face d'entrée du matériau est défini par la relation:

$$\sin \phi = \cos \frac{(\theta_1 + \theta_2)}{2}$$

— le pas de strates $\Lambda$ est défini par la relation:

$$\Lambda = \frac{\lambda_i}{2\sin (\frac{\theta_2 - \theta_1}{2})}$$

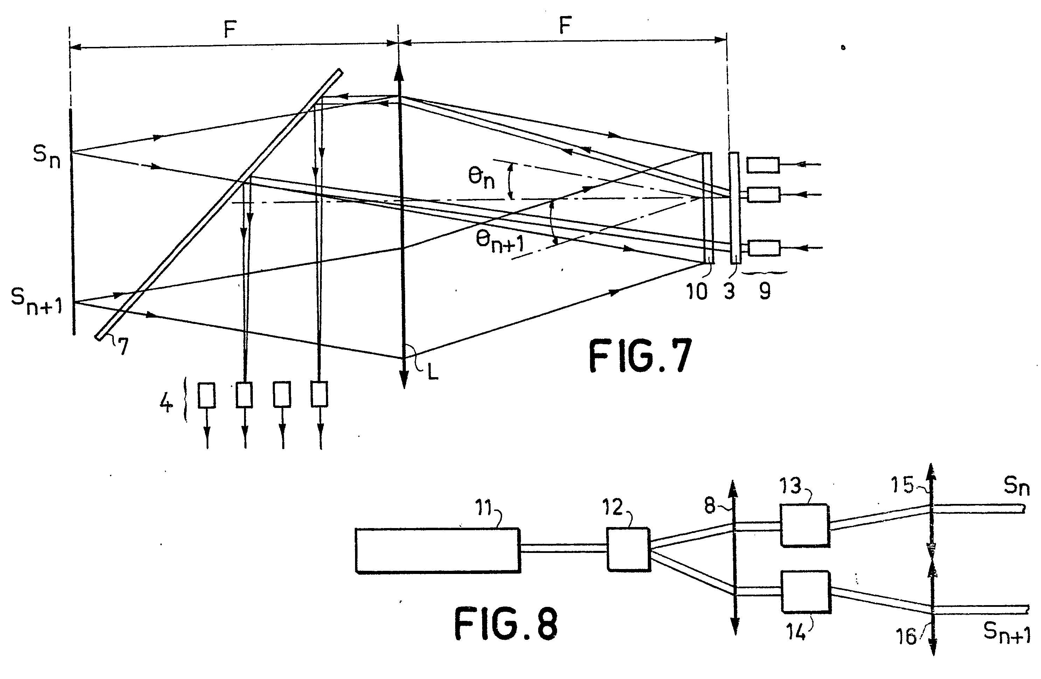

Un dispositif de commutation spatiale est décrit sur les figures 7 et 8. Il comporte les éléments principaux suivants:

— une source d'inscription 11 du type laser Argon par exemple émettant dans le domaine de sensibilité spectrale du matériau photosensible de longueur d'onde $\lambda_i = 488$ nm, ou $\lambda_i = 514$ nm pour le cristal BSO; on a ainsi une énergie d'inscription $S^{-1} \simeq 100$ $\mu J$ cm$^{-2}$;

— des moyens de séparation 12 et de déflexion 13 des ondes pour la génération du couple de sources telles que $S_n$ et $S_{n+1}$, cohérentes entre elles;

— une lentille L utilisée dans la configuration transformation de Fourier;

— un réseau de modulation 10 bidimensionnel commandable en x - y à l'aide de tension $V_x$ - $V_y$;

— un miroir dichroïque 7 assurant la séparation de l'onde diffractée de longueur d'onde $\lambda_l = 800$ - 900 nm; et de l'onde incidente de longueur d'onde $\lambda_i \simeq 500$ nm.

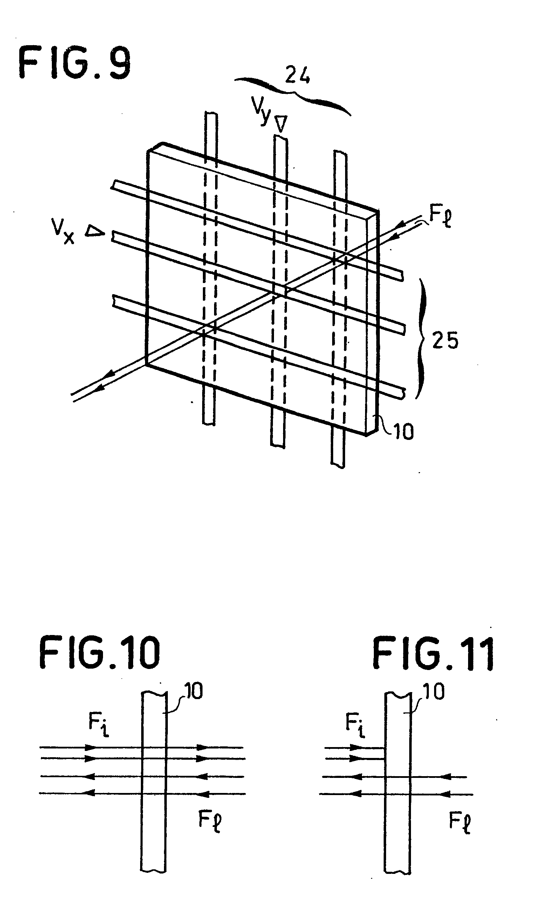

La fonction du modulateur spatial bidimensionnel est expliquée sur la figure 9. Ce modulateur est représenté sous la forme d'une lame insérée entre deux séries d'électrodes 24 et 25 transparentes disposées sur chaque face de la lame, les électrodes de chaque face étant parallèles entre elles et de direction perpendiculaire aux électrodes de l'autre face. A tension appliquée nulle, le modulateur fait fonction d'obturateur pour les faisceaux d'inscription ($\lambda_i \simeq 450$ nm) et possède une transmission maximum pour la longueur d'onde de lecture $\lambda_l$. Par contre lorsque cette tension appliquée est non nulle il possède une transmission maximum pour la longueur d'onde d'inscription $\lambda_i$. Cette fonction permet donc d'isoler le matériau d'enregistrement 3 de la lumière d'inscription pour laquelle il est sensible. L'inscription du réseau holographique assurant la commutation s'effectue donc de la façon suivante:

On sélectionne l'abonné par application de tension $V_x$ - $V_y$ sur le modulateur bidimensionnel. Il en résulte l'ouverture d'une fenêtre transparente 23 devant la fibre émettrice de coordonnées x - y.

On positionne des sources d'inscription $S_n$ et $S_{n+1}$, par exemple. Le réseau holographique de commutation est inscrit devant la seule source émettrice x - y.

Les couples de sources $S_n$, $S_{n+1}$ pour le marquage holographique sont obtenus à partir d'un laser monomode, du type Argon ionisé par exemple. Les longueurs d'ondes utilisables sont alors $\lambda = 514$ nm ou $\lambda = 488$ nm.

Les sources $S_n$ - $S_{n+1}$, comme représentées à la figure 8, sont générées par déflexion en 13 et 14 des faisceaux incidents, issus d'une même source laser 11 après traversée d'un séparateur de faisceau 11, à l'aide de dispositifs par exemple optomécaniques. La position de ces sources déterminée par le calcul est telle que la diffraction des faisceaux émis s'effectue sous incidence Bragg quel que soit le réseau de commutation inscrit.

Le déplacement en x, y des sources $S_n$ et $S_{n+1}$ permet d'obtenir des strates dans le milieu photosensible 3 qui soient variables en pas $\Lambda$ et en orientation. Ces sources permettent d'éclairer tout le milieu 3 et c'est le modulateur 10 qui permet de choisir la partie du milieu 3 dans laquelle les deux faisceaux Fi issus de source vont interférer pour générer ces strates.

Du fait des distances focales F séparant le plan contenant les sources $S_n$ et $S_{n+1}$ de la lentille, et séparant cette même lentille L du milieu photosensible 3, on se trouve dans le cas d'une transformation de Fourier dans le plan du milieu photosensible 3. Les ondes qui étaient circulaires à l'émission par les sources ponctuelles $S_n$ et $S_{n+1}$ sont devenues des ondes planes lorsqu'elles atteignent le milieu 3. En effet les signaux lumineux à l'incidence sur le cristal sont les transformés de Fourier des signaux à l'émission, et ils correspondent à des ondes planes comportant un facteur de phase lié à l'inclinaison de l'onde incidente sur le milieu photosensible 3.

Ainsi avec des sources $S_n$, $S_{n+1}$ et des fenêtres d'ouverture dans le modulateur 10 on inscrit des réseaux identiques en différents endroits du milieu 3. Les circuits photoémetteurs ainsi sélectionnés vont émettre des pinceaux diffractés qui après focalisation par la lentille L, et réflexion sur la lame semi-transparente 7, vont converger en un même point; en effet dans ce cas en sortie du modulateur 10 les faisceaux diffractés sont parallèles entre eux.

Les faisceaux $F_i$ et $F_l$ sont transmis par le modulateur 10, comme représenté à la figure 10.

On met, alors, à zéro les tensions $V_x$ et $V_y$ comme représenté à la figure 11, le réseau est isolé des faisceaux d'inscription $F_i$. La lecture par faisceau $F_l$ du réseau photoinduit assure la diffraction du faisceau dans la direction de l'abonné sélectionné. La lecture à cette longueur d'onde affecte peu le réseau photosensible.

Les faisceaux d'inscription $F_i$ de longueur d'onde $\lambda_i$ sont alors bloqués, pour permettre d'inscrire de nouvelles strates d'interférence dans une autre zone du milieu photosensible 3. Par contre les faisceaux de lecture de longueur d'onde $\lambda_L$ sont transmis. On efface le réseau de commutation en appliquant des tensions $V_x$ - $V_y$ et un éclairage uniforme à l'aide d'une source d'inscription S₁ par exemple. La fonction effacement peut être également réalisée à l'aide d'une autre source cohérente ou incohérente émettant dans le domaine de sensibilité spectrale du cristal.

Le cycle décrit est donc valable pour toute fibre émettrice qui, par l'intermédiaire du réseau de commutation, peut être reliée à un élément quelconque du réseau récepteur qui peut être une matrice de photodiodes ou une matrice de fibres optiques.

On peut laisser en place en permanence les faisceaux de lecture et d'écriture sans nuire au bon fonctionnement du dispositif.

Le support photosensible 3 pour l'inscription des réseaux est par exemple un cristal photoréfractif BSO qui peut fonctionner sous champ appliqué. Les électrodes sont alors réalisées sous forme de peigne interdigité pour maintenir les valeurs faibles de la tension.

La matrice de circuits photoémetteurs est par exemple une matrice de fibres émettrices. Les fibres sont régulièrement ordonnées en x - y; l'onde issue de ces fibres monomodes ou multimodes est collimatée par exemple à l'aide d'un réseau de lentilles à gradient d'indice; le diamètre du faisceau étant de l'ordre de 1 à 2 mm, la matrice de récepteurs peut être selon les applications: une matrice de photodiodes, ou un réseau de lentilles à gradient d'indice reliées à des fibres optiques.

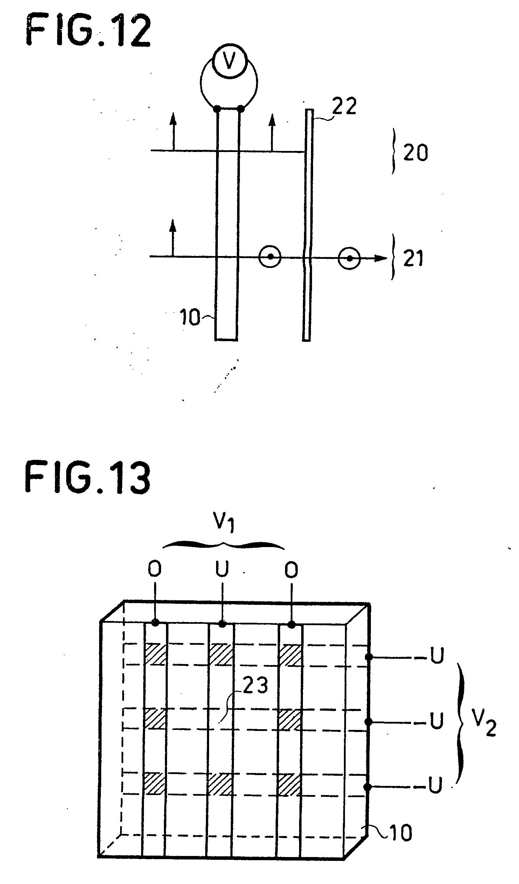

Le modulateur spatial bidimensionnel 10 représenté aux figures 12 et 13 est constitué, par exemple, d'une lame de cristal liquide nématique en hélice placé entre des électrodes soumises à un potentiel variable V.

On sait que le guidage par une hélice d'une onde électromagnétique de polarisation linéaire se traduit toujours par un certain «entrainement» du plan de polarisation. Mais il n'y a d'entrainement synchrone à l'hélice que si le couplage de l'onde avec la matière est suffisamment fort, ce qui suppose à la fois une densité de matière suffisante et un pas de l'hélice nettement supérieur à λ. Ces deux conditions se trouvent réunies par le nématique en hélice qui permet ainsi d'ajuster à exactement π/2 la rotation du plan de polarisation d'une onde transmise par la cellule; il suffit pour cela que les directions imposées aux axes optiques sur les électrodes fassent elles-mêmes un angle droit. Mais lorsque l'on applique aux électrodes une différence de potentiel de l'ordre du volt, toutes les molécules, sauf celles situées au voisinage immédiat des parois, basculent pour s'orienter dans le champ. L'activité optique du film nématique disparait et donc aussi son pouvoir rotatoire. Il y a à ce mode de fonctionnement trois avantages majeurs qui sont: la faiblesse des tensions requises; elles sont en effet de l'ordre du volt, ce qui correspond à une puissance de commande inférieure à 10 µW/cm², l'importance du phénomène électrooptique mis en jeu; une rotation de π/2 du plan de polarisation, et la très grande durée de vie. En contre partie la dynamique est faible, aussi ce nouvel effet électrooptique se prête-t-il surtout à des opérations de commutation.

Un premier ensemble d'électrodes parallèles étant déposé sur la face inférieure du cristal détermine avec un deuxième ensemble d'électrodes déposé sur la face supérieure du cristal, un ensemble de points de croisement qui peuvent être adressés individuellement selon un adressage matriciel. Ces électrodes sont transparentes. Elles peuvent être réalisées, par exemple, avec un oxyde mixte d'indium et d'étain.

Ces électrodes sont soumises à un potentiel variable V tel que pour V = O (en 21) la polarisation incidente est tournée à 90°. Pour V > V$_{seuil}$ (en 20) la polarisation incidente reste inchangée.

Un polarisateur 22 d'axe orthogonal à la polarisation incidente est placé sur la face de sortie du cristal liquide 10. Il est choisi pour faire fonction de polariseur à λ ≃ 500 nm mais possède un faible taux de polarisation à λ ≥ 800 nm. Ainsi le modulateur a une transmission maximum pour λ ≥ 800 nm.

La sélection d'une ouverture 23 de coordonnées (x, y) se fait en appliquant les tensions U comme indiqué à la figure 13.

A titre d'exemple non limitatif et pour fixer les idées, on peut considérer, alors des ordres de grandeurs des dimensions géométriques de ces différents éléments du dispositif de l'invention représentés dans le tableau I situé en fin de description.

De tels dispositifs possèdent un temps d'accès aléatoire inférieur à 10 millisecondes par point. L'inscription des réseaux photoinduits par création du champ de charge d'espace dans le matériau BSO est effectuée à champ nul par diffusion ou par application d'un champ électrique transverse généré par un peigne interdigité par exemple.

Ainsi le dispositif proposé assure la commutation spatiale de 10³-10⁴ abonnés, en un temps inférieur à 10 millisecondes quel que soit l'abonné considéré dans la matrice des sources lumineuses.

*TABLEAU I*

— Réseau de fibres émettrices:
    — Diamètre des lentilles à gradient d'indice: 1.5 à 2 mm
    — Nombre d'émetteurs: $32 \times 32$ (1024)
    — Pas de la matrice: 2 mm

— Matrice de commutation BSO
    — Surface: $70 \times 70$ mm²
    — Epaisseur: 2 à 3 mm

— Lentille L:
    — Focale: F = 60 cm
    — Diamètre: ∅ = 30 cm

— Dimension de la tache dans le plan de la matrice de détection:

$$\varnothing \simeq 300 \, \mu m = \frac{0.8 \times 10^{-3} \times 600}{1.6}$$

— Réseau de détecteurs:
    — Nombre de détecteurs: $32 \times 32$
    — Pas de la matrice: 2 mm

— Puissance optique disponible sur le plan de commutation:
    — $P_i \simeq 10$ mW cm⁻²

*TABLEAU I (continuation)*

— Temps d'inscription (et d'effacement) du réseau:
— $\tau \simeq 10$ ms ($S^{-1} \simeq 100$ µJ cm$^{-2}$)

— Efficacité de diffraction du réseau photoinduit
— $\eta \simeq 1$ à 10% suivant l'amplitude du champ appliqué
($E_o \simeq qqkV$ cm$^{-1}$).

**Revendications**

1. Dispositif de commutation de faisceaux optiques destiné a relier par voie optique au moins l'un des circuits d'un ensemble de circuits photoémetteurs (1, 9) à au moins un circuit d'un ensemble de circuits photorécepteurs (4), comprenant des moyens de génération de deux faisceaux lumineux d'inscription, ces moyens de génération consistant en deux sources lumineuses ($S_n$, $S_{n+1}$) et des moyens de déflexion du rayonnement émis par le circuit photoémetteur rendu préalablement parallèle par des moyens de collimation (2), ces moyens de déflexion permettant de diriger le rayonnement sur la partie active du circuit photorécepteur correspondant (4), ces moyens de déflexion consistant en un réseau de diffraction inscrit dans un milieu photosensible (3) obtenu par l'interférence de ces deux faisceaux lumineux d'inscription, ces deux faisceaux lumineux d'inscription, créant le réseau de diffraction dans le milieu photosensible, ayant une longueur d'onde différente de celle des faisceaux issus des circuits photoémetteurs, et les deux faisceaux lumineux d'inscription étant des faisceaux d'onde plane éclairant, tous deux, uniformément le milieu photosensible (3), caractérisé en ce qu'il comprend un modulateur spatial bidimensionnel (10) positionné sur le parcours de ces faisceaux d'inscription entre lesdites sources lumineuses et le milieu photosensible (3), ce modulateur permettant de sélectionner des zones limitées dans lesquelles des réseaux de diffraction sont inscrits, la sélection de ces zones s'effectuant par l'ouverture d'une fenêtre transparente devant les zones limitées dans lesquelles des réseaux de diffraction sont inscrits et par l'obturation des autres zones, la longueur d'onde du rayonnement émis par le circuit photoémetteur n'étant pas située dans le domaine de sensibilité spectrale du milieu photosensible (3), ce milieu photosensible (3), dans lequel le réseau de diffraction est un réseau tridimensionnel de strates étant continûment recyclable.

2. Dispositif selon la revendication 1, caractérisé en ce qu'il comprend en outre une lentille (L) positionnée sur le parcours des faisceaux d'inscription, le milieu photosensible étant alors situé au foyer de cette lentille, et en ce que les sources lumineuses sont des sources ponctuelles ($S_n$, $S_{n+1}$) pouvant se déplacer dans un plan parallèle a la face du milieu photosensible (3) passant par le foyer de la lentille (L).

3. Dispositif selon la revendication 2, caractérisé en ce que les deux sources ponctuelles ($S_n$, $S_{n+1}$)

sont issues d'une même source (11) et en ce qu'il comprend des moyens séparateurs de faisceau (12) et des moyens supplémentaires de déflexion (13, 14) permettant une déflexion à deux dimensions des faisceaux d'inscription ainsi générés.

4. Dispositif selon la revendication 2, caractérisé en ce qu'il comprend une lame semi-transparente (7) disposée entre les deux sources ponctuelles ($S_n$, $S_{n+1}$) et la lentille (L), cette lame semi-transparente laissant passer les deux faisceaux d'inscription et réfléchissant les faisceaux issus des circuits photoémetteurs après déflexion par le réseau de diffraction.

5. Dispositif selon la revendication 1, caractérisé en ce que le modulateur spatial bidimensionnel est formé d'une lame de cristal liquide insérée entre deux séries d'électrodes transparentes déposées sur chaque face de la lame, les électrodes de chacune de ces faces étant parallèles entre elles, et de direction perpendiculaire avec la direction des électrodes de l'autre face.

6. Dispositif selon la revendication 5, caractérisé en ce que le cristal liquide est un cristal nématique en hélice, un polariseur étant déposé sur l'une de ses faces, cette face étant la face de sortie pour les faisceaux d'inscription.

7. Dispositif selon la revendication 1, caractérisé en ce que les circuits photoémetteurs sont disposés selon une matrice.

8. Dispositif selon la revendication 1, caractérisé en ce que les moyens de collimation (2) sont des lentilles disposées en matrice.

9. Dispositif selon la revendication 8, caractérisé en ce que les lentilles sont des lentilles à gradient d'indice.

10. Dispositif selon l'une quelconque des revendications précédentes, caractérisé en ce que les circuits photoémetteurs sont des fibres optiques.

11. Dispositif selon l'une quelconque des revendications précédentes, caractérisé en ce que les circuits photorécepteurs sont des fibres optiques.

12. Dispositif selon l'une quelconque des revendications précédentes, caractérisé en ce que le milieu photosensible (3) est une lame monocristalline d'oxyde de bismuth-silicium.

13. Dispositif selon l'une quelconque des revendications précédentes, caractérisé en ce qu'il comprend le même nombre de circuits photoémetteurs et de circuits photorécepteurs.

14. Application d'un dispositif de commutation selon l'une quelconque des revendications 1 à 13 à un central téléphonique automatique.

**Patentansprüche**

1. Schaltanordnung für Lichtbündel zur optischen Durchschaltung mindestens eines Lichtemitterkreises aus einer Gruppe solcher Kreise (1, 9) auf mindestens einen Lichtempfängerkreis aus einer Gruppe solcher Kreise (4), mit aus zwei Lichtquellen ($S_1$, $S_{n+1}$) bestehenden Mitteln zur Erzeugung zweier Schreiblichtbündel und mit Mitteln zur Ablenkung dieser vom Lichtemitterkreis ausgesandten und vorher durch Kollimationsmittel (2) parallelisierten Strahlung, wobei diese Ablenkmittel die Strahlung auf den aktiven Teil des entsprechenden Lichtempfängerkreises (4) umzulenken vermögen und aus einem Beugungsgitter bestehen, das in ein durch Interferenz der beiden Schreiblichtbündel erhaltenes lichtempfindliches Milieu (3) eingeschrieben ist, wobei die beiden Schreiblichtbündel, die das Beugungsgitter im lichtempfindlichen Milieu erzeugen, eine andere Wellenlänge als die von den Lichtemitterkreises ausgehenden Lichtbündel besitzen und die beiden Schreiblichtbündel Bündel einer ebenen Welle sind, die beide in gleicher Weise das lichtempfindliche Milieu (3) beleuchten, dadurch gekennzeichnet, dass die Schaltanordnung einen zweidimensional-räumlichen Modulator (10) enthält, der im Verlauf der Schreiblichtbündel zwischen den Lichtquellen und dem lichtempfindlichen Milieu (3) liegt und die Auswahl begrenzter Zonen ermöglicht, in denen Beugungsgitter eingeschrieben sind, wobei die Auswahl durch Öffnen eines durchlässigen Fensters vor den begrenzten Zonen, in denen Beugungsgitter eingeschrieben sind, und durch Abdeckung der anderen Zonen erfolgt, wobei die Wellenlänge der vom Lichtemitterkreis ausgehenden Strahlung nicht im Empfindlichkeits-Spektralbereich des lichtempfindlichen Milieus (3) liegt und wobei dieses Milieu (3), in dem das Beugungsgitter ein dreidimensionales Stratusnetz ist, kontinuierlich rezyklierbar ist.

2. Anordnung nach Anspruch 1, dadurch gekennzeichnet, dass sie ausserdem eine Linse (L) enthält, die im Verlauf der Schreibbündel liegt, während das lichtempfindliche Milieu im Brennpunkt dieser Linse liegt, und dass die Lichtquellen Punktlichtquellen $(S_n, S_{n+1})$ sind, die in einer zur Oberfläche des lichtempfindlichen Milieus (3) parallelen und durch den Brennpunkt der Linse (L) verlaufenden Ebene verschoben werden können.

3. Anordnung nach Anspruch 2, dadurch gekennzeichnet, dass die beiden Punktlichtquellen $(S_n, S_{n+1})$ von einer gemeinsamen Quelle (11) ausgehen und dass die Anordnung Strahltrennmittel (12) und zusätzliche Ablenkmittel (13, 14) aufweist, mit denen die so erzeugten Schreibbündel gemäss zwei Dimensionen abgelenkt werden können.

4. Anordnung nach Anspruch 2, dadurch gekennzeichnet, dass sie ein halbtransparentes Plättchen (7) zwischen den beiden Punktlichtquellen $(S_n, S_{n+1})$ und der Linse (L) enthält, das die beiden Schreibbündel durchlässt und die von den Lichtemitterkreisen ausgehenden Bündel nach deren Ablenkung am Beugungsgitter reflektiert.

5. Anordnung nach Anspruch 1, dadurch gekennzeichnet, dass der räumlich-zweidimensionale Modulator von einem Flüssigkristallplättchen gebildet wird, das zwischen zwei Reihen von auf jeder Oberfläche des Plättchens aufgebrachten transparenten Elektroden eingefügt ist, und dass die Elektroden jeder dieser Oberflächen zueinander parallel sind und senkrecht zur Richtung der Elektroden der anderen Oberfläche verlaufen.

6. Anordnung nach Anspruch 5, dadurch gekennzeichnet, dass der Flüssigkristall ein spiralförmig nematischer Kristall ist und dass ein Polarisator auf einer seiner Oberflächen angeordnet ist, die die Ausgangsfläche für die Schreibbündel ist.

7. Anordnung nach Anspruch 1, dadurch gekennzeichnet, dass die Lichtemitterkreise matrixförmig angeordnet sind.

8. Anordnung nach Anspruch 1, dadurch gekennzeichnet, dass die Kollimationsmittel (2) matrixförmig angeordnete Linsen sind.

9. Anordnung nach Anspruch 8, dadurch gekennzeichnet, dass die Linsen einen Indexgradienten besitzen.

10. Anordnung nach einem beliebigen der vorhergehenden Ansprüche, dadurch gekennzeichnet, dass die Lichtemitterkreise Lichtleitfasern sind.

11. Anordnung nach einem beliebigen der vorhergehenden Ansprüche, dadurch gekennzeichnet, dass die Lichtempfängerkreise Lichtleitfasern sind.

12. Anordnung nach einem beliebigen der vorhergehenden Ansprüche, dadurch gekennzeichnet, dass das lichtempfindliche Milieu (3) ein monokristallines Plättchen aus Silicium-Wismutoxid ist.

13. Anordnung nach einem beliebigen der vorhergehenden Ansprüche, dadurch gekennzeichnet, dass die Anzahl der Lichtemitterkreise der der Lichtempfängerkreise gleicht.

14. Anwendung einer Schaltanordnung nach einem beliebigen der Ansprüche 1 bis 13 auf ein automatisches Telefonamt.

## Claims

1. A device for switching optical beams intended to connect by an optical method at least one of the circuits of a set of photoemitter circuits (1, 9) to at least one circuit of a set of photoreceptor circuits (4), comprising means for generating two inscribing light beams, these generator means being constituted by two light sources $(S_n, S_{n+1})$, and means for deflecting the radiation transmitted by the photoemitter circuit previously made parallel by collimator means (2), these deflector means allowing to direct the radiation onto the active part of the corresponding photoreceptor circuit (4), these deflector means consisting of a diffraction grating inscribed in a photosensitive medium (3) obtained by interference of these two inscribing light beams forming the diffraction grating in the photosensitive medium, these beams having a different wavelength from that of the beams coming from the photoemitter circuit, and the two inscribing light beams being beams of a plane wave illuminating both uniformly the photosensitive medium (3), characterised in that the device comprises a two-dimensional spatial modulator (10) located on the path of said inscribing beam between said light sources and the photosensitive medium (3), said modulator being conceived to select limited zones in which diffraction gratings are inscribed, the selection of these zones being obtained by opening a transparent window in front of the limited zones in which the diffraction gratings are inscribed, and by obturating the other zones, the wavelength of the radiation transmitted by the photoemitter circuit not lying within the range of spectral sensitivity of the photosensitive medium (3), this medium (3), in which the diffraction grating is a three-dimensional network of strata, being continuously recyclable.

2. A device according to claim 1, characterised in that it further comprises a lens (L) located in the path of the inscribing beams, the photosensitive medium being then located in the focal point of said lens, and that the light sources are punctiform sources ($S_n$, $S_{n+1}$) able to be displaced in a plane parallel to the surface of the photosensitive medium (3) passing through the focal point of the lens (L).

3. A device according to claim 2, characterized in that the two punctiform sources ($S_n$, $S_{n+1}$) are derived from a common source (11) and that the device comprises beam separator means (12) and complementary deflection means (13, 14) enabling a deflection in two dimensions of the inscribing beams thus generated.

4. A device according to claim 2, characterized in that it comprises a semi-transparent plate (7) located between the two punctiform sources ($S_n$, $S_{n+1}$) and the lens (L), this semi-transparent plate allowing the two inscribing beams to pass and reflecting the beams coming from the photoemitter circuit after deflection by the diffraction grating.

5. A device according to claim 1, characterized in that the two-dimensional spatial modulator is formed by a liquid cristal plate inserted between two series of transparent electrodes deposited on each surface of the plate, the electrodes of each one of these surfaces being mutually parallel and directed perpendicularly to the direction of the electrodes of the other surface.

6. A device according to claim 5, characterized in that the liquid cristal is a nematic helical cristal, a polarizer being deposited on one of its surfaces, this surface being the output surface for the inscribing beams.

7. A device according to claim 1, characterized in that the photoemitter circuits are arranged in a matrix.

8. A device according to claim 1, characterized in that the collimator means (2) are lenses arranged in a matrix.

9. A device according to claim 8, characterized in that the lenses are index gradient lenses.

10. A device according to any one of the preceding claims, characterized in that photoemitter circuits are optical fibres.

11. A device according to any one of the preceding claims, characterized in that the photoreceptor circuits are optical fibres.

12. A device according to any one of the preceding claims, characterized in that the photosensitive medium (3) is a monocristalline blade of silicium-bismuth oxide.

13. A device according to any one of the preceding claims, characterized in that it comprises the same number of photoemitter circuits and of photoreceptor circuits.

14. The application of a switching device according to any one of the claims 1 to 13 in an automatic telephone exchange.

# FIG.1

# FIG.2

# FIG.3

$F_A$

3

17

5

6

$F_B$

# FIG.4

$F_D$

3

17

5

6

δ

FIG.5

FIG.6

0 083 520

FIG.7

FIG.8

# FIG.9

24

$V_y$ ▽

$V_x$ ▷

$F_\ell$

25

10

# FIG.10

10

$F_i$

$F_\ell$

# FIG.11

10

$F_i$

$F_\ell$

# FIG.12

# FIG.13